# EUROPEAN PATENT APPLICATION

(11) **EP 2 578 395 A1**
(43) Date of publication of application: **10.04.2013**
(21) Application number: 11008023.1
(22) Date of filing: 04.10.2011
(51) Int. Cl.: B32B 27/32, G09F 3/10

(54) **Multilayer label film construction for pressure sensitive labels**

(71) Applicant: RKW SE, 67227 Frankenthal (DE)
(72) Inventor: Grefenstein, Achim, 67122 Altrip (DE); Lapointe, Aaron, Franklin, KY 4213 (US)
(74) Representative: Wagner, Jutta

(57) **Abstract**

The invention provides a transparent, stiff and directly printable label film material with a core layer comprising a layer C based on a polyolefin with an MFI (190 °C/ 2,16kg) lower than 5 g/10 min. sandwiched between two layers B and D based on a polyolefin with an elastic tensile modulus according to ISO 527-3 ( of at least 600 MPa, and two printable skin layers A and E comprising low density polyethylene wherein the ratio of the thickness of layer C to the thickness of each of the layers B and D ranges from 10:1 1 to 1:1 and the layers B, C and D constitute together at least 50 % of the total film thickness.

## Description

The present invention relates to films suitable for the manufacturing of labels.

Self adhesive labels consist generally of a label facestock, an adhesive and a release liner. Usually, the facestock is prepared, then coated with adhesive and brought together with the release liner. Subsequently, the labels are die-cut, the matrix of label facestock is stripped off and the label positioned on the liner wound on a roll or stored otherwise. The actual labelling of substrates is achieved mechanically by guiding the label on the release liner around an edge whereby the label separates from the liner and is transferred to the substrate. This requires a sufficient stiffness of the label facestock.

On the other hand the label has to conform smoothly to the contour of the substrate also when this is curved or bent and even to flexible substrates like squeezable plastic bottles and the like during the actual deformation. Further requirements are transparency, gloss, printability of the surface and of course low cost of material and manufacture of the labels.

Today most conformable polymeric label facestock films are made of low density polyethylene (LDPE) with a minor addition of high density polyethylene (HDPE) or polypropylene (PP) in the formulation in thicknesses between 80 and 100 µm in the blown or cast film process.

Higher amounts of HDPE would be desirable with a view to stiffness in order to allow down gaging, i.e. using thinner films. But due to the anisotropy of HDPE based films it would be difficult to strip off the matrix from the label after die cutting. There are also problems with bubble stability in the blown film process, if the HDPE-amount in the middle layer of a typically used 3-layer film (see e.g. US 5,700,564 B1) is too high. Blown films are preferred because of the usually lower scrap rate and the better overall economics compared to the cast film process. However, blown films normally show more unbalanced thickness profiles than cast films. Furthermore, the transparency, when using large amounts of high crystalline polymers like high density polyethylene or polypropylene as stiffness promoters, is poorer due to the slower cooling, resulting in a higher crystallinity as compared to cast films.

As a solution three layer films with outer layers of LDPE and an inner or core layer of LDPE mixed with 10 to 50 % HDPE are often used. A typical thickness of the core layer is 35 to 60µm with 15 to 30 µm each for the outer layers.

Five layer films have also been proposed. One example is EP 1 508 439 A1 describing multilayer label facestock with a core layer from highly crystalline polypropylene, optionally mixed with up to 20 % polyethylene, two outer layers from low density polyethylene and adhesive intermediate layers comprising from 20 to 95 % propylene random copolymer with an α-olefin, 5 to 30 % ultra low density polyethylene and 0 to 50 % low density polyethylene or linear low density polyethylene. The core layer thickness is specifed as 20 to 80 µm, the outer layers are 3 to 5 µm and the intermediate layers 2 to 10 µm thick.

With a view to costs a film based on cheaper materials especially on recycled material like scraps from the production would be desirable. It is however not easily possible to modify the known structures, most often changes improving one property will influence multiple other properties rendering the films unacceptable in one or more respects.

Surprisingly it was now found that films with a core layer comprising a thick layer from a polyolefin that is optimized for blown film production like LDPE or linear low density polyethylene (LLDPE) and is sandwiched between thinner layers based mainly on a stiff polyolefin like HDPE, blended optionally with LDPE or LLDPE can be easily coextruded with the usual printable skin layers of LDPE and provide films that fulfil the above mentioned requirements. Instead of the HDPE blend other stiff polyolefins like PP can be used, when they are bonded to the printable skin with an adhesive tie layer.

The present invention thus relates to multilayer films useful as label facestock that are printable, conformable and die cuttable, and comprise a core layer comprising a layer C based on a polyolefin with an MFI (190 °C/2,16 kg) lower than 5 g/10 min sandwiched between two stiffer layers B and D based on a polyolefin with an elastic tensile modulus (DIN ISO 527-3) of at least 600 MPa, and two printable skin layers A and E comprising low density polyethylene wherein the ratio of the thickness of layer C to the thickness of each of the layers B and D ranges from 10 : 1 to 1 : 1 and the layers B, C and D constitute together at least 50 % of the total film thickness.

The polyolefin on which layer C is based has preferably an MFI (190 °C/2,16 kg) lower than 3 g/10 min, especially preferred lower than 1 g/10 min.

In the context of the present invention all elastic tensile modulus measurements are carried out according to DIN ISO 527-3 (secant modulus at 1 % elongation) on blown films at least one week after their production, so that post-crystallization of the semicrystallineous polyolefines was nearly completed. The data provided by manufacturers is often measured on test specimens produced differently, in such cases the applicable value is measured as stated herein.

In the context of the present invention the bending resistance (also called bending stiffness) is measured according to SCAN P 29 which correspondes to DIN 53121 with a bending tester from Lorentzen and Wettre at a bending angle of 5°, a bending length of 5 mm and a sample width of 38 mm. The important feature is the bending resistance in machine direction.

The films according to the present invention combine the desired properties to a high extent. They can be produced with the blown film process, scraps from the production and other recycled film material can be used in larger amounts than usual in layer C, high stiffness is achieved without thick layers from the stiff material, it is possible to avoid adhesive layers.

The invention is based on the finding that it is possible to replace a thick core layer from stiff material with a sandwich construction of thin outer layers from a stiff material enclosing a thicker inner layer from a material with lower stiffness, even with considerably lower stiffness. The inner layer can thus be optimized for other requirements, like transparency, process stability, cost, reusability and so on while the core layer (consisting of the two stiff layers sandwiching the less stiff inner layer) as a whole still provides the desired stiffness. With just one thick core layer of a blend of a rigid resin such as HDPE or PP and LDPE or LLDPE the amount of HDPE or PP in the mixture would be limited to lower percentages, typically below 50 %. In the sandwiched core layer according to the invention the layers B and D could even totally consist of a stiff material like HDPE without worsening extrudability and providing a good thickness profile, transparency or ductility of the film.

The material of layer C is consequently chosen for properties other than stiffness. Suitable are e.g. LDPE, LLDPE and their blends. It is possible to admix a stiff polyolefin like HDPE, e.g. in order to increase compatibility and layer adhesion. In one preferred embodiment layer C includes scraps and/or recycled film, preferably blended with LDPE and/or LLDPE. Thus, it is possible to reduce the cost and avoid environmental impact. The thickness of layer C ranges typically from 25 % to 60 % , preferably from 30 % to 50 % of the total film thickness.

The material of layers B and D has to be stiff, provide adhesion with layer C and should preferably provide adhesion with the printable skin layers without the need of an additional tie layer. The thickness of an individual layer B or D ranges preferably from 5 % to 25 % , more preferred from 10 % to 20 % of the total film thickness.

The ratio of the thickness of layer C to layer B and layer C to layer D has to be from 10 : 1 to 1 : 1. Preferably it ranges from 5 : 1 to 2 : 1.

A preferred material for the polyolefin of layers B and D is a blend of high density polyethylene with at least one minor component selected from low density polyethylene, linear low density polyethylene and mixtures thereof. More preferred are blends of HDPE and LDPE and LLDPE. The amount of HDPE ranges preferably from 50 % to 100 % by weight, especially preferred from 80 % to 100 % by weight of layer B or D, respectively.

High density polyethylene, HDPE, is characterized by a low degree of branching and typically has a density of 0.941 kg/dm³ or higher. The lack of branching is ensured by an appropriate choice of catalyst and reaction conditions. The HDPE used for the invention should preferably have a density higher than 0.95 kg/dm³ and an elastic tensile modulus (secant modulus at 1 %) of higher than 600 MPa according DIN ISO 527-3.

Low density polyethylene, LDPE, has a high degree of short and long chain branching. This results in a lower tensile strength and increased ductility. The density typically ranges from 0.910 to 0.940 kg/dm³. LDPE is made by free radical polymerization. The high degree of branching with long chains gives molten LDPE unique and desirable flow properties. In the current invention LDPE with a density higher than 0,923 kg/dm³ is the prefererred skin material, especially preferred is a density higher than 0,93 kg/dm³.

Linear low density polyethylene, LLDPE, is a linear polymer with significant numbers of short branches, commonly made by copolymerisation of ethylene with α-olefins (typically 1-butene, 1-hexene or 1-octene). LLDPE has higher tensile strength than LDPE, it exhibits higher impact and puncture resistance than LDPE. Depending on the catalyst and conditions, the number of short branches varies, the grades with very high amount of short branches being now commonly distinguished from LLDPE as very low density polyethylene, VLDPE. Following that distinction, the density of LLDPE lies in the range from 0.915-0.925 kg/dm³, that of VLDPE from 0.880 to 0.915 kg/dm³. VLDPE is usually obtained by using metallocene or other single site catalysts. LLDPE obtained by using metallocene or other single site catalysts is designated mLLDPE. With respect to a good die cuttability and overall economics of the labels LLDPE is preferred versus VLDPE or mLLDPE. These tough materials are preferably only used as very thin tie layers between Layers A and B or D and E, if needed.

Another preferred material for layers B and D is polypropylene, especially propylene copolymers and most preferred PP random copolymers with up to 30 % by weight α-olefins preferably ethylene or transparent heterophasic PP block copolymers. Optionally the PP can be blended with other PP grades, LLDPE or mLLDPE in order to increase compatibility with layer C and/or layers A and E.

Propylene copolymers are copolymers of propylene with ethylene or other α-olefins like butene, hexene, octene. Preferably the comonomers are used in an amount of up to 30 % by weight, with respect to high stiffness less than 15 % or even less than 10 % being especially preferred. It is preferred to include at least 1 % by weight, preferably at least 3 % and especially preferred at least 5 % comonomer. Suitable materials are commercially available. A suitable PP random copolymer is Borclear 709CF with 9 % by weight ethylene, a suitable heterophasic PP block copolymer is Borpact BC918, both from Borealis.

The polypropylene used should have an elastic tensile modulus (secant modulus at 1 %) in machine direction of at least 600 MPa, preferably at least 700 MPa and most preferred at least 800 MPa as measured according to DIN ISO 527-3 on a 50 µm single layer film.

Generally, PP does not provide adhesion with LDPE, the usual material for the printable skin layers. Thus, tie layers are provided which ensure sufficient adhesion of the skin layers A and E with layers B and D. Suitable tie layers are made from EVA or mLLDPE.

The thickness of the tie layers should be kept lower or equal to 10 %, preferably ≤ 5 % of the total film thickness in order to ensure good die cutting properties of the film.

The skin layers A and E have to be printable and must adhere to the layers below. The preferred material is LDPE with a densitiy of 0.925 kg/dm³ or higher, which is widely used as skin material for label facestock. The thickness of each of the layers A and E should be less than 25 %, preferably less than 20 % of the total film thickness.

All layers can comprise up to 25 % or up to 10 % of common additives like colorants, mineralic fillers, processing aids, antistatic agents, antislip agents, stabilizers, antioxidants, acid neutralizing agents, ultraviolet absorbers, antiblocking agents and antifogging agents. The additives are used in their usual amounts. In the case of not coloured layers additives are usually not present in amounts of more than 5 %.

In the context of the present invention the designation that a layer is based on a specific polymer means that the specified polymer accounts for at least 50 % by weight of the polymers constituting that layer, preferably at least 70 %, more preferred at least 90 % and most preferred there are no other polymeric constituents.

All the layers may comprise several sub-layers, i.e. be a structure of two, three or more layers. Preferably the layers are one-layer structures.

The resulting films according to the invention have excellent optical properties and very balanced mechanical properties making them ideally suited for label applications like self-adhesive labels, wrap-around labels, or in-mould labels.

The total film construction should have a bending resistance in machine direction according to DIN 53121 or SCAN P29 (bending angle 5°, bending length 5 mm and width of sample 38 mm) of at least 25 mN, preferably of at least 30 mN and especially preferred at least 35 mN. They also show a high tensile strength (measured according to DIN ISO 527-3). It is further advantageous that they show a high Elmendorf tear resistance in cross direction (measured according to ASTM D 1922 or ISO 6383-2) of at least 4 N, preferably at least 8 N and more preferred of at least 10 N. A high Elmendorf tear resistance indicates good matrix stability during dispensing.

Films are manufactured in a manner known as such, e.g. by casting or a blow process. Preferably films are made by the blown film process.

The skin layer A and E are preferably directly bonded to layers B and D, i.e. the layers are coextruded, or are coextruded and bonded via tie layers.

The overall film thickness is typically from 20 to 100 µm, preferably from 30 to 85 µm.

The film may be corona treated to increase printability.

It is possible to stretch the film in the machine direction and/or in the cross direction to further increase stiffness but this is not necessary and not preferred according to the invention because of the high stiffness already achieved by choice of the material. If an additional stretching step is foreseen in order to boost the stiffness further, the stretching ratio used preferably ranges from 1 : 2 to 1 : 7, more preferably from 1 : 4 to 1 : 6.

Labels can be manufactured from the films in a manner known as such and described in the various patents mentioned hereinbefore. It is to be noted that the films according to the invention can be easily die-cut and dispensed. They show perfect conformance to uneven contours or during deformation of flexible substrates. Small web printing is easy due to the good ink adhesion and the very good thickness tolerance.

In a preferred embodiment the optical quality is suitable for transparent labels. The haze (ASTM D 1003) is not more than 25 %, preferably not more than 20 %. This means that the film is very clear and transparent. The gloss (ASTM D 2457) at 60° is typically at least 80, preferably at least 90.

It is possible to apply a top coating onto one or both skin layer(s) A and/or E.

The invention will be illustrated further by the following examples and figures, without being restricted to the specific embodiments described therein. Throughout this application, all parts and percentages are by weight of the total composition, unless stated otherwise.

Figure 1 shows a five layer film according to the invention.

Figure 2 shows a seven layer film according to the invention.

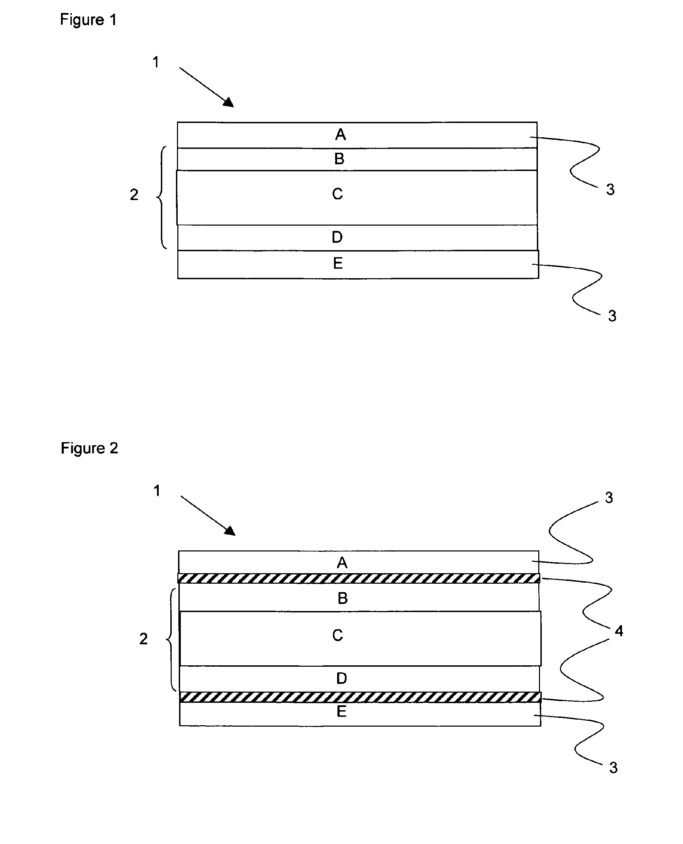

In figure 1 the layer structure of a film according to the invention is shown schematically. Layers A and E are the outer or skin layers 3 and typically made from LDPE. The core layer 2 of film 1 is a sandwich structure from an inner layer C based on LDPE, LLDPE or scraps and two stiff layers B and D based on a blend of LDPE or LLDPE with at least 50 % HDPE.

The embodiment shown in figure 2 is a seven layer film 1. The outer layers 3 are the same as in figure 1. The core layer 2 is also a sandwich structure, with the same inner layer C as in figure 1 or preferably with a higher content of LLDPE. But layers B and D are made from PP. Adhesion during coextrusion with the outer layers 3 made of LDPE is achieved via intermediate tie layers 4 from EVA or mLLDPE.

### Example

One conventional three layer film structure, three 5 layer structures according to the invention and one comparative 5 layer structure were produced on a production blown film line based on the resins listed in table 1. The LDPE 1 is a typical "label grade" that has to be used according to the state of the art for blown label films due to its unique high density and stiffness. The die had a diameter of 500 mm, the blow up ratio was 1 : 2, the resin temperature was 210 °C and the die temperature 220 °C.

**Table 1**

| resin | MFI (190°C/2,16 kg) | Density [kg/dm³] |
|---|---|---|
| LDPE 1 | 2,2 | 0,933 |
| LDPE 2 | 2,3 | 0,929 |
| LDPE 3 | 1 | 0,925 |
| HDPE | 2 | 0,962 |
| LLDPE 1 (regrind) | 1 | 0,92 |
| LLDPE 2 | 1 | 0,925 |

The film structures as listed in table 2 have been produced by varying the layer structure while maintaining the total thickness of all films around 83 µm.
Table 3 presents the properties of the films, determined as follows:
- Tensile test according to DIN ISO 527-3 for the tensile strength and elastic tensile modulus
- Bending test according to SCAN P29 for the bending resistance
- Haze according ASTM D 1003
- Elmendorf Tear resistanceaccording to ASTM D 1922 respectively ISO 6383-2.

**Table 2**

| Film construction | Comparison 1 | Invention 1 | Invention 2 | Invention 3 | Comparison 2 |
|---|---|---|---|---|---|
| Layer A thickness | 18 µm / 22 % | 13 µm / 15 % | 19 µm / 23 % | 8 µm / 10% | 21 µm / 26 % |
| Layer A material | LDPE 1 | LDPE 2 | LDPE 3 | LDPE 3 | LDPE 2 |
| Layer B thickness | - | 13 µm / 15 % | 9 µm / 11 % | 15 µm / 18 % | 10 µm / 12% |
| Layer B material | - | HDPE | HDPE | HDPE | HDPE |
| Layer C thickness | 47 µm / 57 % | 32 µm / 38 % | 28 µm / 33 % | 37 µm / 45 % | 20 µm / 24 % |
| Layer C material | 40 % HDPE / 60 % LDPE1 | 70 % LLDPE1 / 30 % HDPE | LLDPE 2 | LLDPE 2 | 70 % LLDPE1 / 30 % HDPE |
| Layer D thickness | - | 13 µm / 15 % | 9 µm / 11 % | 15 µm / 18 % | 10 µm / 12 % |
| Layer D material | - | HDPE | HDPE | HDPE | HDPE |
| Layer E thickness | 18 µm / 22 % | 13 µm / 15 % | 19 µm / 23 % | 8 µm / 10% | 21 µm / 26% |
| Layer E material | LDPE 1 | LDPE 2 | LDPE 3 | LDPE 3 | LDPE 2 |
| Total thickness | 83 µm | 84 µm | 84 µm | 83 µm | 82 µm |
| Layer ratio C/B and C/D | - | 2,46 | 3,11 | 2,47 | 2 |
| Layer ratio B-D/total | - | 0,68 | 0,55 | 0,81 | 0,48 |

**Table 3**

| Film property | | unit | Comparison 1 | Invention 1 | Invention 2 | Invention 3 | Comparison 2 |
|---|---|---|---|---|---|---|---|
| Thickness | | µm | 83 | 84 | 84 | 83 | 82 |
| Tensile strength | MD | MPa | 18,5 | 20,7 | 19,3 | 21,5 | 19,8 |
| Tensile strength | CD | MPa | 20,1 | 21,4 | 20,0 | 21,8 | 19,7 |
| Modulus 1 % | MD | MPa | 462 | 498 | 413 | 481 | 352 |
| Modulus 1 % | CD | MPa | 541 | 610 | 477 | 532 | 423 |
| Haze | | % | 21,7 | 21,7 | 17,4 | 21,3 | 19,5 |
| Bending resistance | MD | mN | 31 | 38 | 34 | 41 | 24 |
| Elmendorf tear resistance | CD | N | 3,4 | 4,0 | 13,9 | 10,3 | 7,7 |

The results in table 3 show that compared to the present standard film the films according to the invention have superior bending stiffness (means good dispensing in labeling) in combination with higher Elmendorf Tear resistance and tensile strength (means less tendency to matrix breakage after die cutting and removal of the stamped grid). All this in combination with at least as good optical properties (i.e. low Haze) compared to the state-of-the-art 3-layer films. Furthermore, it can be seen that for 5-layer structures at least 50 % of their total thickness needs to be made up of the core layer consisting of layers B to D. Otherwise the stiffness of the films will not suffice.

## Claims

1. Transparent, stiff and direct printable label film material **characterized by** a core layer comprising a layer C based on a polyolefin with an MFI (190 °C/2,16 kg) lower than 5 g/10 min. and a density below 0.950 kg/dm³ sandwiched between two stiffer layers B and D based on a polyolefin with a tensile modulus according to DIN ISO 527-3 of at least 600 MPa and a density of at least 0.95 kg/dm³, and two printable skin layers A and E comprising low density polyethylene with a density of at least 0.923 kg/dm³, wherein the ratio of the thickness of layer C to the thickness of each of the layers B and D ranges from 10 : 1 to 1:1 and the layers B, C and D constitute together at least 50 % of the total film thickness.

2. Film according to claim 1, **characterized in that** layer C is based on low density polyethylene, linear low density polyethylene, scraps or recycled film material or mixtures thereof.

3. Film according to claim 1 or 2, **characterized in that** layers B and D are based on a blend of at least 50 % by weight of the layer high density polyethylene with low density polyethylene and/or linear low density polyethylene.

4. Film according to claim 1 or 2, **characterized in that** the layers B and D are based on polypropylene.

5. Film according to claim 4, **characterized in that** tie layers, preferably from ethylene vinyl acetate or from linear low density polyethylene made with a metallocen or single site catalyst, are provided between layer A and B and layer D and E.

6. Film according to any one of claims 1 to 5, **characterized in that** the low density polyethylene of layers A and E has a density of at least 0.928 kg/dm³ or higher.

7. Film according to claim 5 or 6, **characterized in that** each of the tie layers has a thicknes of up to 10 %, preferably up to 5 % of the total film thickness.

8. Film according to any one of claims 1 to 7, **characterized in that** the thickness of layer C ranges from 25 - 60 %, preferably from 30 - 50 % of the total film thickness.

9. Film according to at least one of the preceding claims, **characterized in that** the thickness of layers B and D ranges from 5 - 25 %, preferably from 10 - 20% of the total film thickness.

10. Film according to at least one of the preceding claims, **characterized in that** the thickness of each of the layers A and E is up to 25 %, preferably up to 20 % of the total film thickness.

11. Film according at least one of the preceding claims **characterized by** a bending resistance in machine direction measured according to DIN 53121 or SCAN P 29 (bending angle 5°, bending length 5 mm and width of sample 38 mm) of at least 25 mN, preferably at least 30 mN and especially preferred at least 35 mN.

12. Film according to at least one of claims 1 to 11 produced in the blown process.

13. Film according to at least one of claims 1 to 11 produced in the cast process.

14. Film according to at least one of the preceding claims **characterized in that** it has been stretched in at least machine direction preferably with a stretching ratio of at least 1 : 2, more preferably of at least 1 : 4.

15. Use of a film according to at least one of the claims 1 to 14 as label material, especially pressure sensitive label material.

16. Label made from a film according to at least one of claims 1 to 14.
